# EUROPÄISCHE PATENTSCHRIFT

(11) **EP 1 588 749 B1**
(45) Veröffentlichungstag und Bekanntmachung des Hinweises auf die Patenterteilung: **10.01.2007**
(21) Anmeldenummer: 05405262.6
(22) Anmeldetag: 23.03.2005
(51) Int. Cl.: B01D 3/00, F16B 5/00, F16B 5/08

(54) **Fluideintrittseinrichtung für einen Apparat, insbesondere für eine Kolonne**
Fluid inlet device for an apparatus, in particular for a column
Dispositif d'entrée d'un fluide pour un appareil, en particulier pour une colonne

(30) Priorität: 23.04.2004 EP 04405249
(43) Veröffentlichungstag der Anmeldung: 26.10.2005
(73) Patentinhaber: Sulzer Chemtech AG, 8404 Winterthur (CH)
(72) Erfinder: Griepsma, Bart, 4003 KW Tiel (NL); Fehr, Emil, 8415 Berg am Irchel (CH)
(74) Vertreter: Sulzer Management AG

(56) Entgegenhaltungen:
- EP-A- 0 948 982
- EP-A- 1 088 577
- DE-A- 1 519 711
- US-A1- 2002 174 900
- US-B1- 6 189 566

## Beschreibung

Die Erfindung betrifft eine Fluideintrittseinrichtung für einen Apparat, insbesondere für eine Kolonne, gemäss Oberbegriff von Anspruch 1. Sie bezieht sich auch auf eine Kolonne mit der erfindungsgemässen Fluideintrittseinrichtung sowie auf eine Verwendung der Fluideintrittseinrichtung.

Aus der DE-A- 1 519 711 ist eine Fluideintrittseinrichtung, nämlich eine Einlass- und Verteileinrichtung für ein Flüssigkeits/Dampf-Gemisch bekannt, mit der ein solches Fluid in eine Kolonne eingespeist werden kann, wobei gleichzeitig die im Fluid mitgeführte Flüssigkeit abscheidbar ist. Dabei wird durch eine Mehrzahl von gekrümmten Leitlamellen oder Leitschaufeln das einströmende Fluid in Teilströme verzweigt und jeder Teilstrom darart umgelenkt, dass die dichtere Phase unter Nutzung von Zentrifugalkräften zumindest teilweise abgeschieden werden kann. Der Dampf wird über den Kolonnenquerschnitt verteilt, während die Flüssigkeit abgeschieden wird. Die Geschwindigkeit des einströmenden Fluids ist in der Regel so hoch, dass Kräfte auf die Einrichtung einwirken, die eine stabile Konstruktion erforderlich machen. Die bekannte Fluideintrittseinrichtung kann selbstverständlich auch zum Einspeisen eines einphasigen Fluids (Flüssigkeit oder Gas) verwendet werden.

Eine stabile Konstruktion, die besonders ihre Form beibehält, wird mit Vorteil aus Metallblechen hergestellt. Die Leitlamellen werden an ihren Seitenkanten mit Wandplatten längs Kontaktlinien zwischen den Lamellen und den Platten verschweisst. Durch das Verschweissen entstehen in der Konstruktion Spannungen, die mittels einer Wärmebehandlung abgebaut werden müssen. Beim Einspeisen eines heissen Fluids, beispielsweise verdampften Erdöls, das eine Temperatur bis 500°C aufweisen kann, würde sich die Fluideintrittseinrichtung ohne die Wärmebehandlung stark verformen, wodurch sich das Fluid im Apparat nur ungenügend verteilen liesse. Ausserdem bestehen weitere Nachteile: Es sind für das Verschweissen relativ aufwändige Arbeitsvorgänge erforderlich. Auch sind die Masse des Aufbaus eingeschränkt, die für die Fluideintrittseinrichtung möglich sind. Denn es muss eine Zugänglichkeit gewahrt sein, um Schweissnähte zwischen den Leitlamellen und den Wandplatten anzubringen.

Aufgabe der Erfindung ist es, eine Fluideintrittseinrichtung zu schaffen, die eine bei erhöhter Temperatur formstabile Konstruktion bildet. Dabei soll diese Konstruktion mittels kleinem Arbeitsaufwand und insbesondere ohne eine Wärmebehandlung herstellbar sein. Diese Aufgabe wird durch die im Anspruch 1 definierte Vorrichtung gelöst.

Die Fluideintrittseinrichtung ist für einen Apparat, insbesondere eine Kolonne vorgesehen. Ein Zulaufstutzen an einer Wand des Apparats dient zum Zuführen eines Fluids, das einphasig oder mehrphasig sein kann. An den Zulaufstutzen schliesst stromabwärts eine Verteilkammer an. An mindestens einer offenen Seite dieser Kammer sind Leitlamellen angeordnet, mittels welchen ein in den Apparat einzuspeisendes Fluid auf gekrümmten Bahnen geführt über eine Fläche des Apparats verteilbar ist. Gleichzeitig mit dem Verteilen ist - im Fall eines zweiphasigen Fluids - eine disperse Phase höherer Dichte unter Nutzung von Zentrifugalkräften zumindest teilweise abscheidbar. Wandplatten von geschlossenen Seiten der Verteilkammer, insbesondere eine Boden- sowie eine Deckenplatte, ergeben zusammen mit an ihnen befestigen Leitlamellen eine formstabile Konstruktion. Jede Leitlamelle ist an Seitenkanten über Formschluss vermittelnden Steckverbindungen an die Wandplatten angeschlossen. Die Stabilität der Konstruktion ist durch Fixierung mittels zusätzlicher Verbindungsmitteln an einzelnen oder allen Steckverbindungen hergestellt.

Die abhängigen Ansprüche 2 bis 7 betreffen vorteilhafte Ausführungsformen der erfindungsgemässen Fluideintrittseinrichtung. Eine Kolonne mit der erfindungsgemässen Fluideintrittseinrichtung ist Gegenstand der Ansprüche 8 und 9. Anspruch 10 bezieht sich auf eine Verwendung der Fluideintrittseinrichtung.

Nachfolgend wird die Erfindung anhand der Zeichnungen erläutert. Es zeigen:
- Fig. 1, 2: zwei bekannte Fluideintrittseinrichtungen,
- Fig. 3: einen unteren Teil einer Kolonne, in welcher die erfindungsgemässe Fluideintrittseinrichtung einsetzbar ist,
- Fig. 4: einen Apparat zum Trennen von zwei Phasen aus einem Flüssigkeits/Dampf-Gemisch,
- Fig. 5: Abschnitte einer Leitlamelle und einer Bodenplatte von einer erfindungsgemässen Fluideintrittseinrichtung, mit getrennten Steckverbindungen,
- Fig. 6: Verschweissung einer Steckverbindung,
- Fig. 7: eine weitere Fixierung der Steckverbindung,
- Fig. 8: eine konstruktive Variante zur oberen Kante der Leitlamelle,
- Fig. 9: eine Steckverbindung mit Schnappsicherung,
- Fig. 10: einen an der oberen Kante der Leitlamelle aufgesetzter Bolzen mit Schraubgewinde,
- Fig. 11: eine Steckverbindung zwischen Leitlamelle und Decken- oder Bodenplatte mit Verschraubung und
- Fig. 12: eine keilgesicherte Steckverbindung.

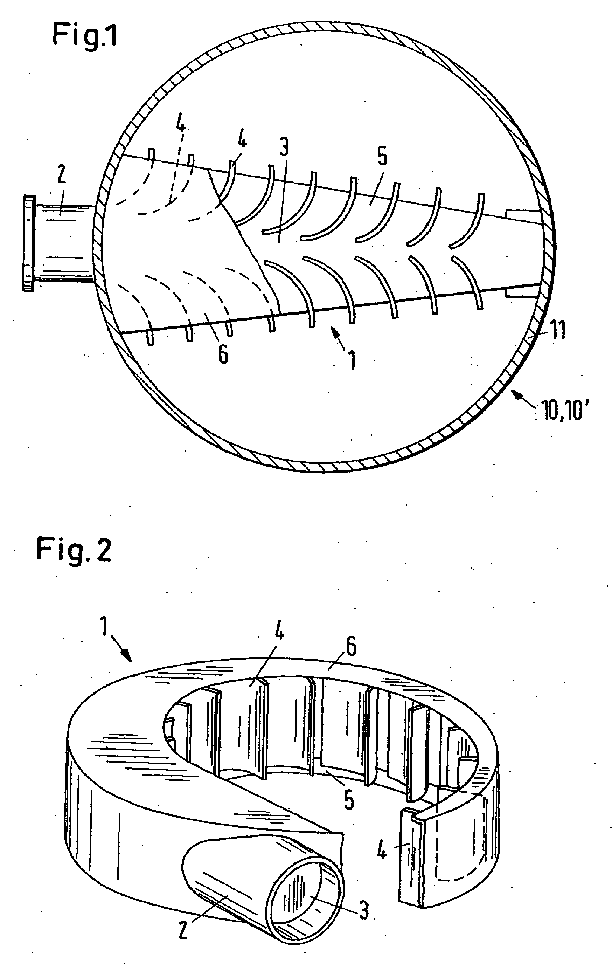

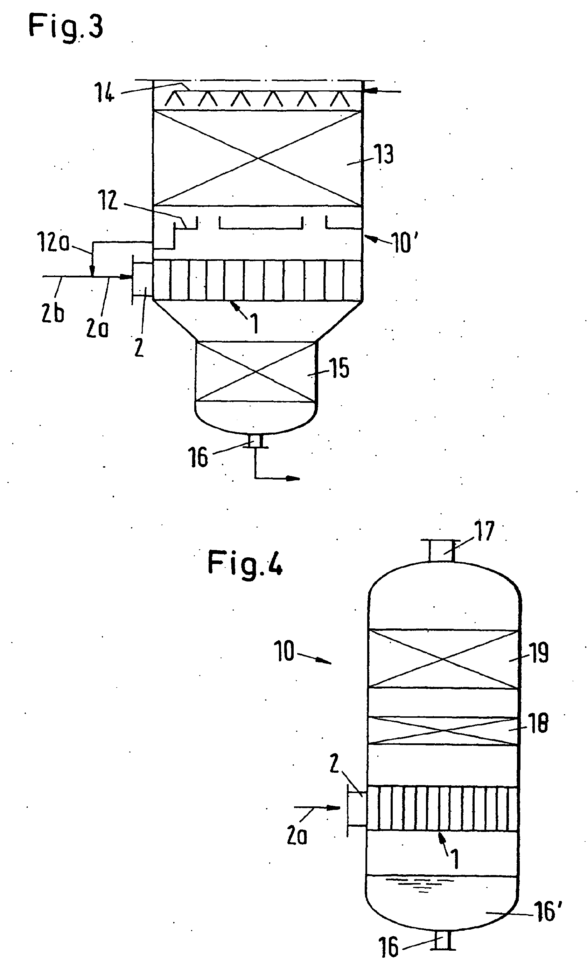

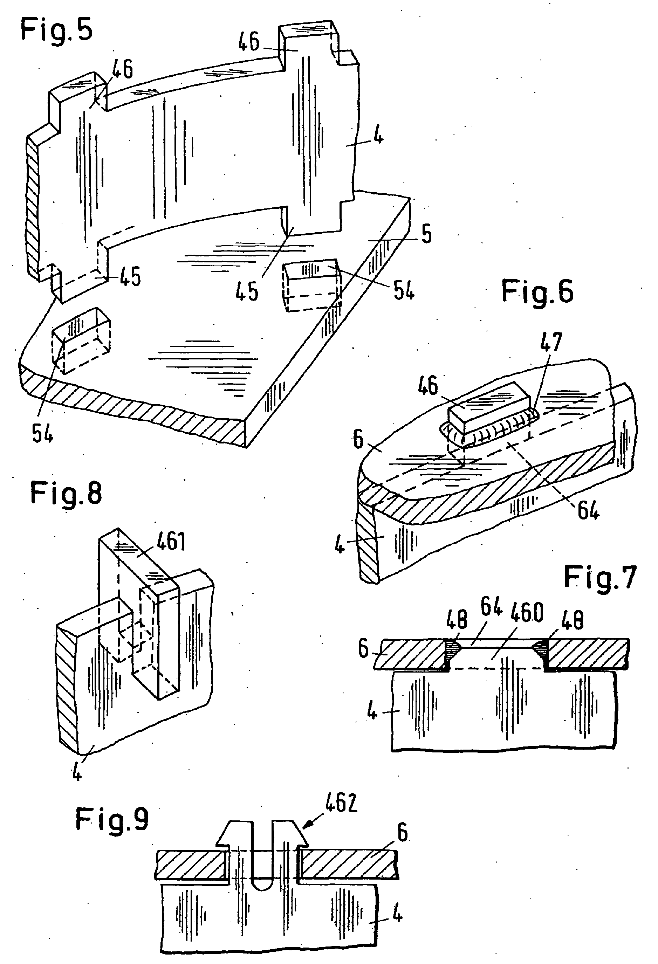

Die in den Figuren 1 und 2 gezeigten Fluideintrittseinrichtungen 1 sind für Apparate 10, insbesondere Kolonnen 10', vorgesehen, wie sie als Beispiele in den Figuren 3 und 4 dargestellt sind. Die Fluideintrittseinrichtung 1 umfasst einen Zulaufstutzen 2 an einer Wand 11 des Apparats 10, eine stromabwärts anschliessende Verteilkammer 3 und an offenen Seiten dieser Kammer 3 angeordnete Leitlamellen 4. Mittels den Leitlamellen 4 lässt sich ein in den Apparat 10 einzuspeisendes Fluid auf gekrümmten Bahnen geführt über eine Fläche des Apparats 10, insbesondere eine Querschnittsfläche der Kolonne 10', verteilen. Gleichzeitig lässt sich eine im Fluid dispergierte Phase höherer Dichte unter Nutzung von Zentrifugalkräften zumindest teilweise abscheiden. Wandplatten, nämlich eine Bodenplatte 5 sowie eine Deckenplatte 6, bilden geschlossene Seiten der Verteilkammer 3. Diese Wandplatten 5 und 6 ergeben zusammen mit den an ihnen befestigen Leitlamellen eine formstabile Konstruktion. Erfindungsgemäss ist jede Leitlamelle 4 an Seitenkanten über Formschluss vermittelnde Steckverbindungen an die Wandplatten 5 und 6 angeschlossen. Solche Steckverbindungen werden nachfolgend anhand der Figuren 5 bis 12 beschrieben. Die Stabilität der Konstruktion wird durch Fixierung mittels zusätzlicher Verbindungsmitteln an einzelnen oder allen Steckverbindungen hergestellt.

In Fig. 1 weist die Fluideintrittseinrichtung 1 eine Verteilkammer 3 mit zwei offenen Seiten auf. In der Draufsicht hat die Verteilkammer 3 im Wesentlichen die Form eines gleichschenkligen Dreiecks. Die Leitlamellen 4 säumen die beiden Schenkel dieses Dreiecks. In Fig. 2 weist die Verteilkammer 3 nur eine offene Seite auf. Sie bildet einen Kanal, der sich an der Innenseite einer zylindrischen Apparatewand (nicht abgebildet) in Form eines Teilrings erstreckt. Die Leitlamellen 4 säumen den zentrumsseitigen Austrittsbereich zwischen Kanalboden 5 und Kanaldecke 6. Die Querschnittsfläche des Kanals wird in Strömungsrichtung einer abnehmenden Durchflussmenge entsprechend kleiner.

In Fig. 3 ist ein unterer Teil einer Kolonne 10' gezeigt, deren Fluideintrittseinrichtung 1 mit Vorteil erfindungsgemäss ausgebildet ist. Durch den Stutzen 2 wird ein Flüssigkeits/Dampf-Gemisch 2a eingespeist, das sich aus einer rückgeführten Flüssigkeit 12a und teilweise verdampftem Erdöl 2b zusammensetzt. Die rückgeführte Flüssigkeit 12a ist eine befrachtete Waschflüssigkeit, die mit einem Verteiler 14 auf eine Packung 13 aufgebracht wird und nach Durchlauf durch die Packung sowie Befrachtung mit Stoffen aus einem Dampfstrom in einem Sammler 12 aufgefangen wird. In der Fluideintrittseinrichtung 1 wird Flüssigkeit zumindest teilweise von Dampf getrennt. Die Flüssigkeit gelangt in eine unter der Fluideintrittseinrichtung 1 angeordnete Packung 15; dort werden mit einem Strippmittel, insbesondere mit Wasserdampf, flüchtige Komponenten aus der Flüssigkeit aufgenommen und in den oberen Teil der Kolonne 10' befördert. Die aus der Packung 15 austretende Flüssigkeit wird im Sumpf über den Ablauf 16 abgezogen.

Die Fig. 4 zeigt einen Apparat 10 zum Trennen der beiden Phasen eines Flüssigkeits/Dampf-Gemischs 2a. Dieser Apparat 10 ist aus der EP-A- 0 195 464 bekannt. Feine Flüssigkeitströpfchen gelangen mit einem Dampfstrom aus der Fluideintrittseinrichtung 1 in eine Einrichtung 18, in der eine Koaleszenz zu grösseren Tröpfchen stattfindet. Diese Tröpfchen werden mit dem Dampfstrom in eine weitere Einrichtung 19 transportiert und dort unter Nutzung von Zentrifugalkräften abgeschieden. Die so abgetrennte Flüssigkeit wird zusammen mit einer ersten Flüssigkeitsfraktion aus der Fluideintrittseinrichtung 1 im Sumpf 16' gesammelt und über den Ablauf 16 abgezogen. Der von der Flüssigkeit befreite Dampfstrom wird am Kopf des Apparats 10 über einen Stutzen 17 abgezogen.

Die Steckverbindungen der Leitlamellen 4, die unter Formschluss verbinden, lassen sich auf verschiedene Arten realisieren. Ein erstes Beispiel zeigt die Fig. 5, in der Abschnitte der Leitlamelle 4 und der Bodenplatte 5 von einer erfindungsgemässen Fluideintrittseinrichtung 1 - mit getrennten Steckverbindungen - dargestellt sind. An der unteren Seitenkanten der Leitlamelle 4 bilden Vorsprünge 45 in Form von Laschen oder Zungen die einen Elemente der Steckverbindungen. Die anderen Elemente sind schlitzförmige, entsprechend den Zungen 45 angeordnete Durchbrüche 54 in der Bodenplatte 5, in welche die Zungen 45 eingeschoben werden. Die Abmessungen der Durchbrüche 54 sind passend ausgeführt, sodass eine Verbindung durch Formschluss zu Stande kommt. An der oberen Kante der Leitlamelle 4 sind auf gleiche Art Zungen 46 vorgesehen, mittels denen Steckverbindungen zur Deckenplatte 6 herstellbar sind: vgl. die Figuren 6 und 7 (Steckverbindungen mit Durchbrüchen 64). Erfindungsgemäss sind einzelne oder alle Steckverbindungen unter Verwendung zusätzlicher Verbindungsmittel fixiert.

Es gibt eine minimale Anzahl von Fixierungsstellen, für welche die Stabilität der Konstruktion gewährleistet ist. Mit dieser minimalen Anzahl ist ein bestimmtes Verteilungsmuster - oder auch mehr als eines - verbunden, gemäss dem die Lagen der Fixierungsstellen angeordnet sein müssen. Zur erhöhten Sicherheit oder einer verbesserten Stabilität kann selbstverständlich auch eine grössere Anzahl von Fixierungsstellen vorgesehen sein, als für das genannte Verteilungsmuster benötigt wird.

Die Fixierung der Steckverbindungen kann durch Stoffschluss, insbesondere durch Verschweissung, hergestellt werden. Die Fig. 6 zeigt eine Verschweissung der Steckverbindung. Bei dieser Fixierung sind die überstehenden Flanken der Zunge 46 an die Wandplatte, die Deckenplatte 6, mit einer zusammenhängenden Schweissnaht 47 befestigt. Statt eines solchen vollständigen Stoffschlusses ist auch ein partialer Stoffschluss möglich, bei dem beispielweise eine Schweissnaht nur an einer Flanke der Zunge 46 angebracht wird. Ein weiteres Beispiel zu einem partialen Stoffschluss ist in Fig. 7 gezeigt: Hier überragt der Vorsprung 460 den Durchbruch 64 nicht. Es sind nur zwei Punktschweissungen 48 an den beiden Enden des Vorsprungs 460 ausgeführt. Es besteht aber auch die Möglichkeit, die offen gebliebene Vertiefung im Durchbruch 64 zwischen den beiden Punktschweissungen 48 mit aufgeweisstem Material auszufüllen.

Da im Gegensatz zur bekannten Fluideintrittseinrichtung bei der erfindungsgemässen Einrichtung 1 nur punktuell Schweissstellen auftreten, ergeben sich keine die Formstabilität beeinträchtigenden Spannungen.

Im Beispiel der Fig. 8 wird ein Steckverbindungs-Element durch ein auf die Seitenkante der Lamelle 4 aufgestecktes Plättchen 461 gebildet, wobei das Plättchen 461 durch Formschluss oder durch Schweissen fixiert ist. Da dieses Element 461 bei der Verwendung der Fluideintrittseinrichtung 1 quer zur Strömungsrichtung des entlang der Leitlamelle 4 strömenden Fluids steht, ergibt sich eine kleine Störung, die jedoch keinen wesentlichen Einfluss auf die Verteil- und Trenngüte der erfindungsgemässen Fluideintrittseinrichtung 1 hat.

Die Fig. 9 zeigt eine Steckverbindung mit Schnappsicherung, bei der das vorspringende Steckverbindungs-Element aus zwei hakenförmigen Schenkeln besteht, die elastisch gegeneinander auslenkbar sind. Diese Steckverbindung stellt ein lösbare Fixierung dar.

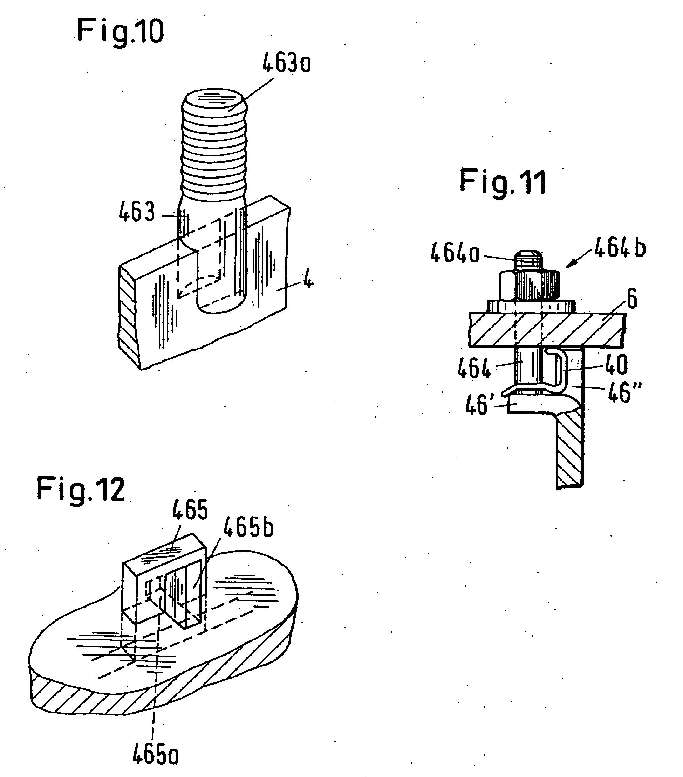

Die Fixierung kann zumindest an einzelnen Fixierungsstellen jeweils mittels einem lösbaren Verbindungsmittel hergestellt werden, beispielsweise mit einer Verschraubung oder einem Keil. Fig. 10 zeigt dazu einen an der oberen Kante der Leitlamelle 4 aufgesetzten Bolzen 463, der am Kopfende ein Schraubgewinde 463a hat. Dieses Steckverbindungs-Element wird in eine Bohrung der Deckenplatte 6 eingeschoben (nicht dargestellt) und mit einer Mutter befestigt. Einzelne Bolzen 463 ohne Schraubköpfe werden als nicht fixierte Steckverbindungen in entsprechene Bohrungen eingeschoben.

Eine variante Schraubverbindung ist in Fig.11 dargestellt. Ein Bolzen 464 mit Schraubkopf 464a ist auf einer umgebogenen Lasche 46' befestigt. An der oberen Seitenkante der Leitlamelle 4 ist durch das Wegbiegen der Lasche 46' eine Öffnung 46" entstanden, die durch ein L-förmiges Blechelement 40 verschlossen ist. (Das Blechelement 40, das eine Bohrung aufweist, ist auf den Bolzen 464 aufgesetzt.) Der Bolzen ist mit einer Verschraubung 464b an der Deckenplatte 6 fixiert.

Schliesslich zeigt Fig. 12 eine keilgesicherte Steckverbindung, die eine Lasche 465 mit Durchbruch 465a und in diesem steckenden Keil 465b umfasst.

Die erfindungsgemässe Fluideintrittseinrichtung 1 lässt sich verwenden, um ein Fluid, das mehrphasig oder einphasig sein kann, in einen Apparat (beispielsweise eine Kolonne) einzuspeisen und in diesem zu verteilen. Dabei kann ein in den Apparat zugeführter Gasstrom 2a mit einer dichteren Phase, beispielsweise Flüssigkeitströpfchen, befrachtet sein, die beim Einspeisen abgeschieden werden. Das Fluid kann aus nur einem Stoff oder aus einem einphasigen Stoffgemisch bestehen.

## Patentansprüche

1. Fluideintrittseinrichtung (1) für einen Apparat (10), insbesondere eine Kolonne (10'), mit einem Zulaufstutzen (2), der an einer Wand (11) des Apparats befestigbar ist, zum Zuführen eines Fluids (2a), das einphasig oder mehrphasig sein kann, mit einer stromabwärts anschliessenden Verteilkammer (3) und mit an mindestens einer offenen Seite dieser Kammer angeordneten Leitlamellen (4), mittels welchen das Fluid auf gekrümmten Bahnen geführt über eine Fläche des Apparats verteilbar ist und gleichzeitig - im Fall eines zweiphasigen Fluids - eine disperse Phase höherer Dichte unter Nutzung von Zentrifugalkräften zumindest teilweise abscheidbar ist, wobei Wandplatten (5, 6) von geschlossenen Seiten der Verteilkammer, insbesondere eine Boden- sowie eine Deckenplatte, zusammen mit an ihnen befestigten Leitlamellen eine formstabile Konstruktion ergeben,
**dadurch gekennzeichnet, dass** jede Leitlamelle an Seitenkanten über Formschluss vermittelnden Steckverbindungen an die Wandplatten angeschlossen ist und dass die Stabilität der Konstruktion durch Fixierung mittels zusätzlicher Verbindungsmittel an einzelnen oder allen Steckverbindungen hergestellt ist wobei die Fixierung zumindest an einer minimalen Anzahl von Fixierungsstellen, für welche die stabililät des Konstruktion gewährleistet ist erfolgt.

2. Fluideintrittseinrichtung nach Anspruch 1, **dadurch gekennzeichnet, dass** die Fixierung durch Stoffschluss, insbesondere durch Verschweissung (47, 48) hergestellt ist, wobei die fixierten Steckverbindungen jeweils einen partialen Stoffschluss aufweisen können.

3. Fluideintrittseinrichtung nach Anspruch 2, **dadurch gekennzeichnet,**
**dass** die Fixierung durch Schweissung an überstehenden Flanken von Laschen (45, 46), die an den Seitenkanten der Leitlamellen (4) Vorsprünge bilden, hergestellt ist, wobei diese Laschen in schlitzförmige Durchbrüche (54, 64) der Wandplatten (5, 6) eingeschoben sind.

4. Fluideintrittseinrichtung nach einem der Ansprüche 1 bis 3, **dadurch gekennzeichnet, dass** die Fixierung zumindest an einzelnen Fixierungsstellen jeweils mittels einem lösbaren Verbindungsmittel, beispielsweise einer Schnappsicherung (462), einer Verschraubung (464b) oder einem Keil (465b), hergestellt ist.

5. Fluideintrittseinrichtung nach einem der Ansprüche 1 bis 4, **dadurch gekennzeichnet, dass** die gewählte Anzahl der Fixierungsstellen grösser als die minimale Anzahl ist.

6. Fluideintrittseinrichtung nach einem der Ansprüche 1 bis 5, **dadurch gekennzeichnet, dass** die Verteilkammer (3) in der Draufsicht im Wesentlichen die Form eines gleichschenkligen Dreiecks aufweist und die Leitlamellen (4) die beiden Schenkel dieses Dreiecks säumen.

7. Fluideintrittseinrichtung nach einem der Ansprüche 1 bis 5, **dadurch gekennzeichnet, dass** die Verteilkammer (3) einen Kanal bildet, der sich an der Innenseite einer zylindrischen Apparatewand in Form eines Teilrings erstreckt, und dass die Leitlamellen (4) einen zentrumsseitigen Austrittsbereich zwischen Kanalboden und -decke (5, 6) säumen, wobei insbesondere die Querschnittsfläche des Kanals in Strömungsrichtung einer abnehmenden Durchflussmenge entsprechend kleiner wird.

8. Apparat, insbesondere Kolonne (10'), mit der Fluideintrittseinrichtung (1) gemäss einem der Ansprüche 1 bis 7.

9. Apparat, insbesondere Kolonne (10'), nach Anspruch 8, **dadurch gekennzeichnet, dass** unterhalb der Fluideintrittseinrichtung (1) Flüssigkeitssammler oder Einrichtungen (15) zu einem Behandeln von abgetrennter Flüssigkeit angeordnet sind.

10. Verwendung der Fluideintrittseinrichtung (1) gemäss einem der Ansprüche 1 bis 7 zwecks Einspeisung und Verteilens eines Fluids, das mehrphasig oder einphasig sein kann, insbesondere eines Gasstroms (2a), der mit einer dichteren Phase, beispielsweise Flüssigkeitströpfchen, befrachtet ist bzw. der aus nur einem Stoff oder einem einphasigen Stoffgemisch besteht.

## Claims

1. A fluid inlet device (1) for an apparatus (10), in particular a column (10'), having an inflow stub (2) which can be attached to a wall (11) of the apparatus for the supply of a fluid (2a), which can be single phase or multi-phase, having a distribution chamber (3) adjoining downstream and guide lamellae (4) arranged at at least one open side of this chamber by means of which the fluid guided on curved tracks can be distributed over a surface of the apparatus and simultaneously - in the case of a two-phase fluid - a dispersed phase of higher density can be at least partly separated using centrifugal forces, with wall panels (5, 6) of closed sides of the distribution chamber, in particular a base panel and a top panel with guide lamellae secured to them, together forming a construction of stable shape, **characterised in that** each guide lamella is connected at side edges to the wall panels via plug connections providing a form fitted connection; and **in that** the stability of the construction is established by fixing by means of additional connection means at individual plug connections or all plug connections, with the fixing taking place, at least at a minimum number of attachment points for which the stability of the construction is ensured..

2. A fluid inlet device in accordance with claim 1, **characterised in that** the fixing is established by material connection, in particular by welding (47, 48), with the fixed plug connections each being able to have a partial material connection.

3. A fluid inlet device in accordance with claim 2, **characterised in that** the fixing is established by welding at projecting flanks of tabs (45, 46) which form projections at the side edges of guide lamellae (4), with these tabs being inserted into slit-shaped openings (54, 64) of the wall panels (5, 6).

4. A fluid inlet device in accordance with any one of claims 1 to 3, **characterised in that** the fixing is established at least at individual fixing positions by means of a respective releasable connection means, for example by means of a snap connection (462), a screw connection (464b) or a wedge (465b).

5. A fluid inlet device in accordance with any one of claims 1 to 4, **characterised in that** the selected number of fixing positions is equal to or larger than the minimum number.

6. A fluid inlet device in accordance with any one of claims 1 to 5, **characterised in that** the distribution chamber (3) substantially has the shape of an isosceles triangle in plan view and the guide lamellae (4) line the two limbs of this triangle.

7. A fluid inlet device in accordance with any one of claims 1 to 5, **characterised in that** the distribution chamber (3) forms a passage which extends in the form of a part ring at the inner side of a cylindrical apparatus wall; and **in that** the guide lamellae (4) line a discharge region at the centre side outlet region between the passage base and the passage top (5, 6), with the cross-sectional surface of the passage in particular becoming smaller in the flow direction in correspondence with a reducing flow rate.

8. An apparatus, in particular a column (10'), having the fluid inlet device (1) in accordance with any one of claims 1 to 7.

9. An apparatus, in particular a column (10'), in accordance with claim 8, **characterised in that** liquid collectors or devices (15) for a treatment of separated liquid are arranged beneath the fluid inlet device (1).

10. Use of the fluid inlet device (1) in accordance with any one of claims 1 to 7 for the purpose of feeding and distributing a fluid, which can be multi-phase or single phase, in particular a gas flow (2a) which is loaded with a denser phase, for example liquid droplets, or which consists of only one substance or of a single phase material mixture.

## Revendications

1. Dispositif d'entrée de fluide (1) pour un appareil (10), en particulier une colonne (10'), avec un raccord d'afflux (2), qui peut être fixé à une paroi (11) de l'appareil, pour l'amenée d'un fluide (2a), qui peut comprendre une ou plusieurs phases, avec une chambre de distribution (3) faisant suite en aval et avec des lamelles de guidage (4) disposées à au moins un côté ouvert de cette chambre, au moyen desquelles le fluide est guidé sur des trajets courbés et peut être distribué sur une face de l'appareil et, en même temps, dans le cas d'un fluide diphasique, une phase dispersée d'une plus grande densité peut être séparée au moins partiellement en tirant profit de forces centrifuges, où des plaques de paroi (5, 6) de côtés fermés de la chambre de distribution, en particulier une plaque de fond ainsi qu'une plaque de recouvrement, produisent ensemble avec des lamelles de guidage fixées à celles-ci une construction d'une forme stable,
**caractérisé en ce que** chaque lamelle de guidage est reliée à des arêtes latérales par des connexions à enfichage entraînant une liaison par concordance des formes aux plaques de paroi, et **en ce que** la stabilité de la construction est établie par la fixation par des moyens de liaison additionnels à différentes ou toutes les connexions à enfichage, où la fixation a lieu au moins à un nombre minimal d'emplacements de fixation, pour lesquels la stabilité de la construction est assurée.

2. Dispositif d'entrée de fluide selon la revendication 1, **caractérisé en ce que** la fixation est réalisée par une liaison de matières, en particulier par soudage (47, 48), où les connexions à enfichage fixées peuvent présenter chacune une liaison de matières partielle.

3. Dispositif d'entrée de fluide selon la revendication 2, **caractérisé en ce que** la fixation est réalisée par une soudure à des flancs saillants de languettes (45, 46) qui forment aux arêtes latérales des lamelles de guidage (4) des saillies, où ces languettes sont poussées dans des perçages en forme de fente (54, 64) des plaques de paroi (5, 6).

4. Dispositif d'entrée de fluide selon l'une des revendications 1 à 3, **caractérisé en ce que** la fixation est réalisée au moins à des emplacements de fixation individuels à chaque fois par un moyen de liaison relâchable, par exemple un verrouillage par encliquetage (462), un vissage (464b) ou un coin (465b).

5. Dispositif d'entrée de fluide selon l'une des revendications 1 à 4, **caractérisé en ce que** le nombre sélectionné des emplacements de fixation est plus grand que le nombre minimal.

6. Dispositif d'entrée de fluide selon l'une des revendications 1 à 5, **caractérisé en ce que** la chambre de distribution (3), en une vue de dessus, a sensiblement la forme d'un triangle à branches égales, et **en ce que** les lamelles de guidage (4) délimitent les deux branches de ce triangle.

7. Dispositif d'entrée de fluide selon l'une des revendications 1 à 5, **caractérisé en ce que** la chambre de distribution (3) forme un canal qui s'étend au côté intérieur d'une paroi d'appareil cylindrique sous la forme d'une bague partielle, et **en ce que** les lamelles de guidage (4) délimitent une zone de sortie, côté centre, entre le fond de canal et le plafond de canal (5, 6), où en particulier la face en section transversale du canal dans la direction d'écoulement diminue en fonction d'un débit d'écoulement décroissant.

8. Appareil, en particulier colonne (10') avec le dispositif d'entrée de fluide (1) selon l'une des revendications 1 à 7.

9. Appareil, en particulier colonne (10'), selon la revendication 8, **caractérisé en ce que** en dessous du dispositif d'entrée de fluide (1), des collecteurs de liquide ou des installations (15) pour un traitement d'un liquide séparé sont disposés.

10. Utilisation du dispositif d'entrée de fluide (1) selon l'une des revendications 1 à 7, pour l'introduction et la distribution d'un fluide, qui peut être à une ou plusieurs phases, en particulier d'un flux de gaz (2a) chargé d'une phase plus dense, par exemple de gouttelettes de liquide, respectivement qui est constitué d'une seule matière ou d'un mélange de matières monophasé.
